# EUROPEAN PATENT APPLICATION

(11) **EP 1 724 316 A1**
(43) Date of publication of application: **22.11.2006**
(21) Application number: 05719918.4
(22) Date of filing: 03.03.2005
(51) Int. Cl.: C09D 183/02, B05D 7/24, C09D 4/02, C09D 5/00, C09D 163/00

(54) **ACTIVE ENERGY RAY-CURABLE COATING COMPOSITION AND METHOD FOR FORMING PROTECTIVE COATING FILM**

(30) Priority: 09.03.2004 JP 2004065711
(71) Applicant: MITSUBISHI RAYON CO., LTD., Tokyo 108-8506 (JP)
(72) Inventor: MOTONAGA, Akira, c/o Yokohama Res. Lab.,, Yokohama-shi, Kanagawa 2300053 (JP); TAKEUCHI, Hiroshi., c/o Yokohama Res. Lab.,, Yokohama-shi, Kanagawa 2300053 (JP); INOUE, Hiroshi, Aichi 4411325 (JP)
(74) Representative: TBK-Patent
(86) International application number: PCT/JP2005/003614
(87) International publication number: WO 2005/085373

(57) **Abstract**

A coating composition curable by active energy rays which composition can form an transparent inorganic cured film having an excellent appearance, a mar resistance, and film adhesion properties is provided. The coating composition contains a siloxane compound (A) obtainable by the hydrolysis and condensation of an alkyl silicate expressed by the following general formula (1) 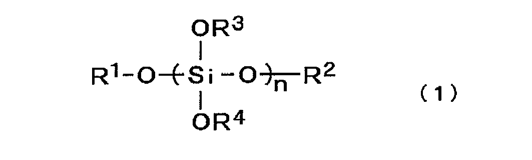 wherein R¹, R², R³, and R⁴ represent an alkyl group having 1 to 5 carbon atoms or an acyl group having 2 to 4 carbon atoms, respectively, and n indicates an integer from 3 to 20, and a cation polymerization initiator (B) having a sensitivity to the active energy rays. A method for forming a protective film by applying the coating composition on the surface of a plastic substrate and then irradiating the composition with active energy rays to form the protective film is also provided.

## Description

### TECHINICAL FIELD

The present invention relates to a coating composition which is curable by active energy rays and can form, in a short time, a transparent protective film having an excellent mar resistance, and also relates to a method for forming a protective film using the coating composition.

### BACKGROUND ART

In recent years, transparent plastic materials such as acrylic resins and polycarbonate resins which are excellent in the shatter resistance and lightweight properties have come to be widely used as substitute for transparent glass. However, since the transparent plastic materials are low in the surface hardness compared with glass, the plastic materials have such a problem that their surface is readily marred.

Accordingly, many attempts have been made from some time ago to improve the mar resistance of the plastic materials. One of the most typical methods is to form a protective film having an excellent mar resistance on the surface of a plastic material by applying a composition comprising a multifunctional acrylic compound having two or more acryloyl groups or methacryloyl groups in the molecule on the surface of the plastic material and then curing the composition with active energy rays such as heat rays and ultraviolet rays to form a protective film having an excellent mar resistance on the surface of the material. This method is employed in many uses since the composition used for forming the protective film is comparatively low in price and the productivity of the protective film is excellent (for more detailed procedures, reference should be made to the patent documents 1, 2, and 3 listed below). However, since the protective film formed in the method described above is an organic film, it is a current situation that the improvement of the mar resistance has its limit.

On the other hand, in order to impart a still higher mar resistance to the plastic materials, another method is proposed wherein a silica type composition comprising an alkoxysilane compound is applied on the surface of a plastic material and cured with heat to form a protective film (for more detailed procedures, see the patent documents 4 and 5 mentioned below). However, such method as described in patent documents 4 and 5 has a problem in the aspect of the productivity since a heating time for from tens of minute to several hours is necessary to form the protective film.

In order to solve those problems, a still another method in which a composition containing, as essential components, a straight chain type inorganic oligomer having a siloxane skeleton and a cation polymerization initiator is cured by irradiation of active energy rays to form an inorganic protective film is proposed (for more detailed procedures, reference should be made to the patent document 6 listed below). However, the method for forming such an inorganic film as disclosed in patent document 6 has problems that a bridged structure having a sufficient strength can not be formed on a substrate and thus that film properties are hardly developed only by a short time irradiation of a coating composition with active energy rays. The reason is that in the method of patent document 6, the bridged structure is formed to produce a cured film only after a coating composition comprising a straight chain type inorganic oligomer (an alkyl silicate) and a cation polymerization initiator was applied on the surface of a substrate and then subjected to an irradiation for a sufficient time with active energy rays. Especially, sufficient properties are hardly developed in the aspect of the mar resistance. Besides, the method described in patent document 6 has such additional problems that a sudden polycondensation reaction is done in a short time at the time of the curing, cracks are produced in the cured film due to the stress generated by the shrinkage accompanied by the sudden polycondensation reaction, and thus that the adhesion properties of the cured film to the substrate are reduced.

Moreover, in order to improve such defects as described above, a still another method in which a cation polymerizable epoxy compound having an excellent polymerizability and flexibility, or a radical polymerization initiator having a sensitivity to active energy rays and a radical polymerizable acrylic compound are blended to a coating composition, in addition to the alkyl silicate and the cation polymerization initiator having a sensitivity to active energy rays, to reduce the development of cracks and to impart an excellent adhesion properties to the cured film is proposed. However, this method has such a problem that a high hardness and a high mar resistance which are characteristics of inorganic protective films are apt to be reduced depending on the amount of those organic compounds to be blended.
Patent document 1: Laid-open Japanese Patent Publication No. Sho 53-102936
Patent document 2: Laid-open Japanese Patent Publication No. Sho 53-104638
Patent document 3: Laid-open Japanese Patent Publication No. Sho 54-97633
Patent document 4: Laid-open Japanese Patent Publication No. Sho 48-26822
Patent document 5: Laid-open Japanese Patent Publication No. Sho 55-94971
Patent document 6: Laid-open Japanese Patent Publication No. 2001-348515

### DISCLOSURE OF THE INVENTION

### PROBLEMS TO BE SOLVED BY THE INVENTION

The present invention is to solve the problems in the prior art described above. Accordingly, an object of the present invention is to provide a coating composition which is curable by active energy rays and can form, in a short time, a transparent inorganic cured film having an excellent appearance, a mar resistance, and film adhesion properties. Another object of the present invention is to provide a method for forming, on the surface of a substrate, a protective film using the coating composition.

### MEANS FOR SOLVING THE PROBLEMS

As a result of repeated investigations conducted by the present inventors to achieve the objects of the invention described above, it has been found that a composition containing, as essential components, a silica type oligomer (a siloxane compound) obtainable by the hydrolysis and condensation of a specific alkyl silicate, and a cation polymerization initiator which has a sensitivity to active energy rays is excellent in the curability by active energy rays and can form a transparent protective film having an excellent mar resistance, leading to the accomplishment of the present invention.

That is, the present invention relates a coating composition which is curable by active energy rays and contains a siloxane compound (A) obtainable by the hydrolysis and condensation of an alkyl silicate expressed by the following general formula (1) 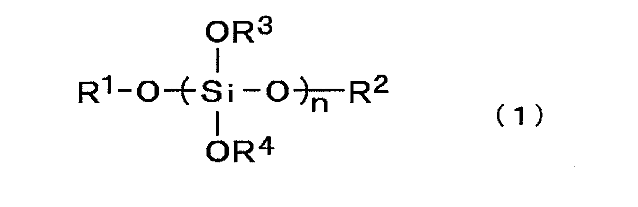 wherein R¹, R², R³, and R⁴ represent an alkyl group having 1 to 5 carbon atoms or an acyl group having 2 to 4 carbon atoms, respectively, and n indicates an integer from 3 to 20, and a cation polymerization initiator (B) which has a sensitivity to the active energy rays.

Further, the present invention relates to a method for forming a protective film by applying the coating composition described above on the surface of a substrate and then irradiating active energy rays to the composition to form the protective film.

### EFFECTS OF THE INVENTION

According to the present invention, a coating composition which is curable by active energy rays and can form in a short time a transparent inorganic cured film which is excellent in the appearance, mar resistance, and film adhesion properties can be obtained.

Also, an inorganic protective film which is excellent in the mar resistance and adhesion properties to a plastic substrate and has a good appearance can be formed in a short time on the plastic substrate by applying the coating composition on the surface of the plastic substrate and then irradiating active energy rays thereto.

### BEST MODE FOR CARRYING OUT THE INVENTION

Siloxane compound (A) used in the coating composition of the present invention is a hydrolysis-condensation product of an alkyl silicate expressed by the general formula (1) described above. By subjecting the alkyl silicate to a hydrolysis-condensation in advance to form a bridged structure among alkyl silicate molecules thereby convert the silicate into a high molecular weight compound, it becomes possible to improve the curability of the silicate when it is used as a component of the coating composition and to greatly enhance the physical properties of a protective film to be obtained. Also, by using a high molecular weight oligomer converted from the silicate, it becomes possible to decrease the shrinkage of a coated film due to the (poly)condensation at the time of the curing and to reduce the stress generated accompanied by the shrinkage. As the result, the occurrence or development of cracks can be decreased and the film adhesion properties can be improved.

In the general formula (1), R¹, R², R³, and R⁴ represent an alkyl group having 1 to 5 carbon atoms or an acyl group having 2 to 4 carbon atoms, respectively. Those groups may be the same or different. n indicates the number of repeating units of an alkyl silicate and is an integer from 3 to 20. When n is less than 3, the molecular weight of a siloxane compound obtained by the hydrolysis-condensation of an alkyl silicate is small and thus the curability and film forming ability of a coating composition are low and the physical properties of a protective film to be obtained are poor. Conversely, when n is larger than 20, the coating composition is readily gelled at the time of the hydrolysis-condensation. From viewpoints that a coating composition having a good curability can be obtained, that a film having excellent film physical properties can be formed, and that a coating composition which is hardly gelled can be prepared, n is preferably an integer of 4 to 10 (corresponding to about 51 to about 54% by mass in terms of silica conversion concentration). In this connection, the term "silica conversion concentration" used in the present description means the mass of SiO₂ obtained when an alkylsilicate was completely hydrolyzed and condensed.

As specific examples of the alkyl silicate expressed by the general formula (1), methyl silicate wherein each of R¹ to R⁴ is methyl group, ethyl silicate wherein each of R¹ to R⁴ is ethyl group, isopropyl silicate wherein each of R¹ to R⁴ is isopropyl group, n-propyl silicate wherein each of R¹ to R⁴ is n-propyl group, n-butyl silicate wherein each of R¹ to R⁴ is n-butyl group, n-pentyl silicate wherein each of R¹ to R⁴ is n-pentyl group, and acetyl silicate wherein each of R¹ to R⁴ is acetyl group can be mentioned. Among them, methyl silicate and ethyl silicate are preferable from viewpoints that their preparation is easy and that the rate of their hydrolysis is high.

The hydrolysis can be performed by using a known method. For instance, a method in which an alkyl silicate is mixed with an alcohol, water (for example, 1 to 1,000 mole of water per 1 mole of an alkyl silicate) and an acid such as hydrochloric acid and acetic acid are further added thereto to make the solution acidic (for example, pH of 2 to 5), and then the solution is stirred can be used. Also, another method in which an alkyl silicate is mixed with an alcohol, water (for example, 1 to 1,000 mole of water per 1 mole of an alkyl silicate) is further added thereto, and then the mixture is heated (for example, at 30 to 100°C) can be used. The alcohol generated at the time of hydrolysis may be distilled off and discharged outside the reaction system. The condensation which follows the hydrolysis may be progressed by allowing the alkoxy silane which exists in the system in a hydrolysed condition to stand. At that time, progress of the condensation can be accelerated by controlling the pH of the solution (for example, to a pH of 6 to 7). The water generated at the time of the condensation may be distilled off and discharged outside the reaction system.

When the alkyl silicate is hydrolysed and condensed, an alkoxysilane may be allowed to coexist and may be copoly-condensed in an amount within the range in which the objects and effects of the present invention are not damaged. As specific examples of the alkoxysilane, tetramethoxysilane, tetraethoxysilane, methyltrimethoxysilane, methyltriethoxysilane, ethyltrimethoxysilane, ethyltriethoxysilane, phenyltrimethoxysilane, phenyltriethoxysilane, dimethyldimethoxysilane, diethyldimethoxysilane, diethyldiethoxysilane, diphenyldimethoxysilane, diphenyldiethoxysilane, trimethylmethoxysilane, triethylethoxysilane, γ-glycidoxypropyltrimethoxysilane, and r-(meth)acryloxypropyltrimethoxysilane can be mentioned.

The cation polymerization initiator (B) having a sensitivity to active energy rays and used in the coating composition of the present invention is an initiator which initiates a cation polymerization by the irradiation of active energy rays such as visible rays, ultraviolet rays, heat rays, and electron rays. As the initiator (B), a cation polymerization initiator having a sensitivity to light and generating acid by the irradiation of visible rays or ultraviolet rays, and a cation polymerization initiator having a sensitivity to heat and generating an acid by the irradiation of heat rays are preferable. Among them, a cation polymerization initiator having a sensitivity to light is more preferable from viewpoints of having a high activity and of causing no heat deterioration to plastic materials.

As examples of the cation polymerization initiator having a sensitivity to light, a compound such as a diazonium salt, iodonium salt, sulfonium salt, phosphonium salt, selenium salt, oxonium salt, and ammonium salt can be mentioned. As their specific examples, IRGACURE 250 (Trade name of a chemical produced by Ciba Specialty Chemicals K. K.), ADEKA Optomer SP-150, SP-170 (both are trade names of chemicals produced by Asahi Denka Kogyo Co., Ltd.), CYRACURE UVI-6970, CYRACURE UVI-6974, CYRACURE UBI-6990, CYRACURE UVI-6950 (aforementioned four are trade names of chemicals produced by Union Carbide Corp. U.S.A.), DAICAT II (Trade name of a chemical produced by Daicel Chemical Industries, Ltd.) UVAC1591 (trade name of a chemical produced by Dicel·UCB Co., Ltd.), and Cl-2734, Cl-2855, Cl-2823, Cl-2758 (aforementioned four are trade names of chemicals produced by Nippon Soda Co., Ltd.) can be mentioned.

The amount of the cation polymerization initiator (B) having a sensitivity to active energy rays and blended into the coating composition is not especially limited, but it is preferably within the range of 0.01 to 10 parts by mass based on 100 parts by mass of the component (A). When the amount is 0.01 parts by mass or more, the coating composition is sufficiently cured by the irradiation of active energy rays and an excellent protective film tends to be obtained. With respect to the physical properties of a protective film to be obtained, when the amount is 10 parts by mass or less, a film which is not colored and has a high surface hardness and mar resistance tends to be obtained. Further, the amount of the cation polymerization initiator (B) is more preferably within the range of 0.05 to 5 parts by mass from the viewpoints of a good curability of the coating composition and excellent physical properties of a protective film to be obtained.

The coating composition of the present invention preferably further contains an epoxy compound (C). By blending an epoxy compound (C) in addition to the components (A) and (B), toughness is imparted to a protective film to be obtained.

Type of the epoxy compound (C) is not especially limited as long as it has an epoxy group in the molecule. As specific examples of the epoxy compound (C), (3-glycidoxypropyl)trimethoxysilane, (3-glycidoxypropyl)triethoxysilane, ethylneglycol diglycidyl ether, polyethyleneglycol diglycidyl ether, propyleneglycol diglycidyl ether, tripropyleneglycol diglycidyl ether, polypropyleneglycol diglycidyl ether, 1,4-butanediol diglycidyl ether, neopentylglycol diglycidyl ether, 1,6-hexanediol diglycidyl ether, glycerin diglycidyl ether, diglycerin tetraglycidyl ether, trimethylol propane triglycidyl ether, 2,6-diglycidyl phenyl ether, sorbitol triglycidyl ether, triglycidyl isocaynulate, diglycidyl amine, diglycidyl benzylamine, diglycidyl ester of phthalic acid, bisphenol A diglycidyl ether, butanediene dioxide, dicyclopentadiene dioxide, 3,4-epoxycyclohexylmethyl-3,4-epoxycyclohexane carboxylate, 3,4-epoxy-6-methylcyclohexylmethyl-3,4-epoxy-6-methylcyclohexane carboxylate, bis(3,4-epoxycyclohexylmethyl)-adipate, dicyclopentadienol epoxide glycidyl ether, pentaerythritol polyglycidyl ether, an addition product of a bisphenol A type epoxy resin and ethylene oxide, a phenol novolak type epoxy resin, and a cresol novolak type epoxy resin can be mentioned. Among them, compounds having 2 or more epoxy groups in the molecule are preferable from viewpoints of a high curing rate of the coating composition and an excellent mar resistance of a protective film to be obtained. As to the manner of using the epoxy compound (C), one epoxy compound may be used alone or two or more epoxy compounds may be used in combination.

Also, when a substrate to be used is composed of a resin other than acrylic resins, for example, a polycarbonate resin, it is desirable to form a primer layer comprising an acrylic polymer on the surface of a substrate in advance, and then applying a coating composition of the present invention on the primer layer and curing the composition in order to further increase the adhesion properties of the protective film to the substrate. Particularly, when a crosslinked (meth)acrylic polymer obtained by irradiating a coating composition containing a polyfunctional (meth)acrylate and a radical polymerization initiator having a sensitivity to active energy rays with the active energy rays is formed on a substrate as primer layer, the epoxy compound (C) is preferably incorporated in the coating composition of the present invention. Among the epoxy compound (C), (3-glycidoxypropyl)trimethoxysilane or (3-glycidoxypropyl)triethoxysilane is preferably blended in particular.

The amount of the epoxy compound (C) to be blended is not especially limited, but that amount, per 100 parts by mass of the component (A), is preferably within the range of 0 to 200 parts by mass and more desirably within the range of 10 to 100 parts by mass.

The coating composition of the present invention preferably further contains a vinyl compound (D) having, in the molecule, a group having polymerizable double bond, and a radical polymerization initiator (E) having a sensitivity to active energy rays. By incorporating these components (D) and (E) in addition to the components (A) and (B), the curability of the coating composition by active energy rays is more improved and a toughness is imparted to a protective film to be obtained.

A vinyl compound (D) having, in the molecule, a group having polymerizable double bond is a compound which is blended in the coating composition together with the radical polymerization initiator (E) having a sensitivity to active energy rays, and polymerized by radical polymerization when irradiated with active energy rays. This vinyl compound (D) is not especially limited as long as it has, in the molecule, a group having polymerizable double bond. As the vinyl compound (D), a monofunctional or polyfunctional (meth)acrylate compound having an acryloyl group or methacryloyl group in the molecule is especially preferable from a viewpoint that such a compound has a high polymerization rate.

As specific examples of the monofunctional (meth)acrylate compound, phenyl (meth)acrylate, benzyl (meth)acrylate, phenylethyl (meth)acvrylate, phenoxyethyl (meth)acrylate, (meth)acrylate modified with para-cumyl phenol ethyleneoxide, isobornyl (meth)acrylate, cyclohexyl (meth)acrylate, dicyclopentenyl (meth)acrylate, dicyclopentanyl (meth)acrylate, tetrahydrofurfuryl (meth)-acrylate, methyl (meth)acrylate, ethyl (meth)acrylate, propyl (meth)acrylate, n-butyl (meth)acrylate, i-butyl (meth)acrylate, t-butyl (meth)acrylate, pentyl (meth)acrylate, 2-ethylhexyl (meth)acrylate, n-hexyl (meth)acrylate, 2-hydroxyethyl (meth)acrylate, 2-hydroxypropyl (meth)acrylate, 2-hydroxybutyl (meth)-acrylate, 4-hydroxybutyl (meth)acrylate, and phosphoethyl (meth)acrylate can be mentioned.

As specific examples of polyfunctinal (meth)acrylate, ethylene glycol di(meth)acrylate, diethylene glycol di(meth)acrylate, triethylene glycol di(meth)-acrylate, polyethylene glycol di(meth)acrylate, tripropylene glycol di(meth)-acrylate, polypropylene glycol di(meth)acrylate, polybutylene glycol di(meth)-acrylate, 1,3-butylene glycol di(meth)acrylate, 1,6-hexanediol di(meth)acrylate, neopentyl glycol di(meth)acrylate, 2,2-bis[4-(meth)acryloyloxyphenyl]-propane, 2,2-bis[4-(meth)acryloyloxyethoxyphenyl]-propane, 2,2-bis[4-(meth)acryloyloxydiethoxyphenyl]-propane, 2,2-bis[4-(meth)acryloyloxypentaethoxyphenyl]-propane, 2,2-bis[4-(meth)acryloyloxyethoxy-3-phenylphenyl]-propane, bis[4-(meth)acryloylthiophenyl]sufide, bis[4-(meth)acryloyloxyphenyl]-sulfone, bis[4-(meth)acryloyloxyethoxyphenyl]-sulfone, bis[4-(meth)acryloyloxydiethoxy-phenyl]-sulfone, bis[4-(meth)acryloyloxypentaethoxyphenyl]-sulfone, bis[4-(meth)acryloyloxyethoxy-3-phenylphenyl]-sulfone, bis[4-(meth)acryloyloxy-ethoxy-3,5-dimethylphenyl]-sulfone, bis[4-(meth)acryloyloxyphenyl]-sulfide, bis[4-(meth)acryloyloxyethoxyphenyl]-sulfide, bis[4-(meth)acryloyloxypentaethoxyphenyl]-sulfide, bis[4-(meth)acryloyloxyethoxy-3-phenylphenyl]-sulfide, bis[4-(meth)acryloyloxyethoxy-3,5-dimethylphenyl]-sulfide, 2,2-bis[4-(meth)-acryloyloxyethoxy-3,5-dibromophenylpropane], trimethylol propane tri(meth)-acrylate, tetramethylol methane tri(meth)acrylate, tetramethylol methane tetra-(meth)acrylate, and dipentaerythritol hexa(meth)acrylate can be mentioned.

Among them, a polyfunctional (meth)acrylate is preferable from the viewpoints that the curability of the coating composition is good and that the mar resistance of a protective film to be obtained is excellent. As to the manner of using the vinyl compound (D), one vinyl compound may be used alone or two or more vinyl compounds may be used in combination.

The blending amount of the vinyl compound (D) having, in the molecule, a group having polymerizable double bond is not especially limited, but the amount of the compound (D), per 100 parts by mass of the component (A), is preferably within the range of 0 to 200 parts by mass and more preferably 10 to 100 parts by mass.

A radical polymerization initiator (E) having a sensitivity to active energy rays is a component which reacts to active energy rays to generate radicals thereby initiate the polymerization of the vinyl compound (D). Among the polymerization initiators (E), a radical polymerization initiator which reacts to visible rays and ultraviolet rays to generate radicals is preferable from viewpoint of causing no heat deterioration to a plastic substrate.

As specific examples of the radical polymerization initiators (E) having a sensitivity to active energy rays, 3,3-dimethyl-4-methoxy-benzophenone, benzyldimethylketal, isoamyl p-dimethylamminobenzoate, ethyl p-dimethylaminobenzoate, benzophenone, p-methoxybenzopenone, 2,2-diethoxyacetophenone, 2,2-dimethoxy-1,2-diphenylethane-1-one, 1-hydroxycycohexyl phenyl ketone, methylphenylglyoxylate, ethylphenylglyoxylate, 2-hydroxy-2-methyl-1-phenylpropane-1-one, and 2-methyl-1-[4-(methylthio)phenyl]-2-morpholino-propanone-1, 2,4,6-trimethylbenzoyldiphenylphosphine oxide can be mentioned. Among them, methylphenylglyoxylate, 2-hydroxy-2-methyl-1-phenylpropane-1-one, 1-hydroxycycohexyl phenyl ketone, 2,2-dimethoxy-1,2-diphenylethane-1-one, benzyldimethylketal, and 2,4,6-trimethylbenzoyl diphenylphosphine oxide are more preferable from a viewpoint that they have a high activity. As to the manner of using the radical polymerization initiator (E), one initiator may be used alone or two or more initiators may be used in combination.

The blending amount of the radical polymerization initiator (E) having a sensitivity to active energy rays is not especially limited, but it is preferably within the range of 0.01 to 5 parts by mass per 100 parts by mass of the component (D). When this blending amount is 0.01 parts by mass or more, the curing rate of the coating composition by the irradiation with active energy rays is preferably high. On the other hand, when the amount is 5 parts by mass or less, a protective film to be obtained preferably has no coloration and has high mar resistance. The blending amount of the initiator (E) is more preferably within the range of 0.1 to 3 parts by mass.

In the coating composition of the present invention, a polymer, polymer fine particles, a colloidal silica, colloidal metal, photosensitizer (for example, anthracene type compound, thioxanthone type compound, anthraquinone type compound, naphthalene type compound, and pyrene type compound), filler, dyestuff, pigment, pigment dispersing agent, flow adjusting agent, leveling agent, anti-foaming agent, UV absorber, light stability improver, and antioxidant, gel particles, and powders of fine particles may by added, when necessary, in addition to the components (A) to (E).

As the polymer, an acrylic type polymer and a polyalkylene glycol type polymer can be mentioned as examples. Among them, an acrylic type polymer is especially preferable in the aspects that it exhibits a good compatibility with the coating composition of the present invention, that it imparts toughness to a film to be obtained, and that it increases adhesion properties of the protective film to an acrylic resin type substrate.

It is desirable that the coating composition of the present invention contains an organic solvent for the purpose of adjusting the solid content, increasing the dispersion stability, improving the application (coating) properties, and improving the adhesion properties to a substrate. As the organic solvent, for example, an alcohol, ketone, ether, ester, cellosolve, and aromatic compound can be mentioned.

As specific examples of the organic solvent, methanol, ethanol, 1-propanol, 2-propanol, 1-butanol, 2-butanol, isobutyl alcohol, t-butyl alcohol, benzyl alcohol, 2-methoxyethanol, 2-ethoxyethanol, 2-(methoxymethoxy)-ethanol, 2-butoxyethanol, furfuryl alcohol, tetrahydrofurfuryl alcohol, diethylene glycol, diethylene glycol monomethyl ether, diethylene glycol monoethyl ether, diethylene glycol monobutyl ether, 1-methoxy-2-propanol, 1-ethoxy-2-propanol, dipropylene glycol, dipropylene glycol monomethyl ether, dipropylene glycol monoethyl ether, tripropylene glycol monomethyl ether, diacetone alcohol, acetone, methyl ethyl ketone, 2-pentanone, 3-pentanone, 2-hexanone, methyl isobutyl ketone, 2-heptanone, 4-heptanone, diisobutyl ketone, cyclohexanone, methylcyclohexanone, acetophenone, diethyl ether, dipropyl ether, diisopropyl ether, dibutyl ether, dihexyl ether, anisole, phenetole, etrahydrofuran, tetrahydropyran, 1,2-dimethoxyethane, 1,2-diethoxyethane, 1,2-dibutoxyethane, diethylene glycol dimethyl ether, diethylene glycol diethyl ether, diethylene glycol dibutyl ether, glycerol-ether, methyl acetate, ethyl acetate, propyl acetate, isopropyl acetate, butyl acetate, isobutyl acetate, sec-butyl acetate, pentyl acetate, isopentyl acetate, 3-methoxybutyl acetate, 2-ethylbutyl acetate, 2-ethylhexyl acetate, methyl propionate, ethyl propionate, butyl propionate, r -butyrolactone, 2-methoxyethyl acetate, 2-ethoxyethyl acetate, 2-butoxyethyl acetate, 2-phenoxyethyl acetate, diethylene glycol monoethyl ether acetate, diethylene glycol monobutyl ether acetate, benzene, toluene, and xylene can be mentioned. These organic solvents may be used alone or in combination of two or more.

Content of the organic solvents is preferably within the range of 10 to 1,000 parts by mass per 100 parts by mass of the total amount of the components (A) to (E). When the amount is 10 parts by mass or more, there are trends that the storage stability of the coating composition becomes excellent, the viscosity of the solution of the composition does not raise up to a too high value, and an excellent coated film can be obtained. Also, when the amount is less than 1,000 parts by mass, there are trends that a problem that the content of solid components (hereinafter referred to as solid content, for brevity) is too low and thus the thickness of a coated film to be obtained is too thin is hardly arises, and thus that a protective film having an excellent mar resistance can be obtained.

A protective film can be formed by applying the coating composition of the present invention, for example, on the surface of a plastic substrate (the thickness of a coated film is about 0.5 to 100 µm), and then curing the coating composition by irradiating active energy rays thereto.

Application of the coating composition can be performed by one of the methods known in public heretofore, for example, by a method using a spray gun, roller coater, gravure coater, flexo coater, screen, spin coater, or flow coater, or by a method of electrostatic spray coating.

As the active energy rays, vacuum ultraviolet rays, ultraviolet rays, visible rays, near infrared rays, infrared rays, far infrared rays, microwaves, electron rays, β -rays, and γ-rays can be mentioned. Especially, ultraviolet rays or visible rays are preferably used in combination with a polymerization initiator having a sensitivity to light from the viewpoints of a high polymerization rate and of a comparatively small deterioration of a substrate. As specific examples of the rays, active energy rays emitted by using, as light source, a low pressure mercury lamp, intermediate pressure mercury lamp, high pressure mercury lamp, ultra-high pressure mercury lamp, incandescent electric lamp, xenon arc lamp, halogen lamp, carbon arc lamp, metal halide lamp, fluorescent lamp, tungsten lamp, gallium lamp, excimer laser, or sun can be mentioned. As to the manner of using the active energy rays, one type of energy rays may be used without other kinds of the energy rays or two or more kinds of the energy rays may be used in combination. When two or more different kinds of active energy rays are used, they may be used at the same time or in turn to irradiate.

The coating composition of the present invention can be applied not only to substrates of a plastic such as an acrylic type resin and polycarbonate resin but also to various types of substrates such as a metal, can, paper, wood, inorganic material, electrodeposition coated plate, and laminated plate.

### EXAMPLES

Now, the present invention will be described in more detail with reference to Examples. However, it should be understood that the scope of the present invention is by no means restricted by such specific Examples.

### <Synthesis Example 1: Synthesis of siloxane compound (A1)>

As alkyl silicate, 20.0 g of methylsilicate having a silica conversion concentration of 53% by mass (produced by COLCOAT Co., Ltd., about heptamer in average, average molecular weight about 789, trade name: Methyl Silicate 53A) was used. Isopropyl alcohol in an amount of 20.0 g was added to the methyl silicate and stirred to form a homogeneous solution. Further, 1.8 g of water was added thereto and heated at 70°C for 2 hours while being stirred to hydrolyze. Thereafter, the solution was cooled down to 25°C and stirred for 24 hours to progress condensation. Further, isopropyl alcohol was added so that the total weight of the solution becomes 53 g to obtain a solution of siloxane compound (A1) having a solid content of 20% by mass.

### <Synthesis Example 2: Synthesis of siloxane compound (A2)>

Synthesis Example 1 was repeated with the exception that as alkyl silicate, 20.0 g of methyl silicate having a silica conversion concentration of 51 % by mass (produced by COLCOAT Co., Ltd., about tetramer in average, average molecular weight about 470, trade name: Methyl Silicate 51) was used and that the total weight of the solution at the time when isopropyl alcohol was added after the condensation, was changed to 51.0 g, to obtain a solution of siloxane compound (A2) having a solid content of 20% by mass.

### <Synthesis Example 3: Synthesis of siloxane compound (A3)>

Isopropyl alcohol in an amount of 20.0 g was added to a mixture of 10.0 g of methyl silicate having a silica conversion concentration of 53% by mass (produced by COLCOAT Co., Ltd., about heptamer in average, average molecular weight about 789, trade name: Methyl Silicate 53A) used as alkyl silicate and 10.0 g of methyltrimethoxysilane (produced by Shin-Etsu Chemical Co., Ltd., molecular weight 136), and stirred to form a homogeneous solution. Further, 9.0 g of water was added thereto and heated at 70°C for 2 hours while being stirred to hydrolyze. Thereafter, the solution was cooled down to 25°C and stirred for 24 hours to progress condensation. Further, isopropyl alcohol was added so that the total weight of the solution becomes 51.0 g to obtain a solution of siloxane compound (A3) having a solid content of 20% by mass.

### <Synthesis Example 4: Synthesis of siloxane compound (A'4)>

Synthesis Example 1 was repeated with the exception that 20.0 g of tetraethoxysilane (produced by COLCOAT Co., Ltd., molecular weight 208, trade name: Ethyl Silicate-28) was used as alkyl silicate and that the mass of the total solution at the time when isopropyl alcohol was added after the condensation, was changed to 56.0 g, to obtain a solution of siloxane compound (A'4) having a solid content of 20% by mass.

### <Synthesis Example 5: Synthesis of siloxane compound (A5)>

Isopropyl alcohol in an amount of 10.0 g was added to a mixture of 10.0 g of methyl silicate having a silica conversion concentration of 53% by mass (produced by COLCOAT Co., Ltd., about heptamer in average, average molecular weight about 789, trade name: Methyl Silicate 53A) used as alkyl silicate and 17.2 g of methyltrimethoxysilane (produced by Shin-Etsu Chemical Co., Ltd., molecular weight 136), and stirred to form a homogeneous solution. Further, 10.5 g of water was added thereto and heated at 80°C for 3 hours while being stirred to hydrolyze. Thereafter, the solution was cooled down to 25°C and stirred for 24 hours to progress condensation. Further, isopropyl alcohol was added so that the total weight of the solution becomes 69.0 g to obtain a solution of siloxane compound (A5) having a solid content of 20% by mass.

### <Example 1>

### [Preparation of coating composition]

To 50.0 g (10.0 g as solid content) of a solution of the siloxane compound (A1) having a solid content of 20% by mass, obtained in the Synthesis Example 1 described above, and used as component (A) were added 0.2 g of a propylene carbonate solution of iodonium, (4-methylhenyl)[4-(2-methylpropyl)-phenyl]-hexafluorophosphate(1-) (produced by Ciba Specialty Chemicals K. K., trade name: IRGACURE 250) used as component (B), 0.05 g of silicone type surface active agent (produced by NIPPON UNICAR COMPANY LIMITED, trade name: L-7001, and 10.0 g of isopropyl alcohol, 15.0 g of γ-butyrolactone, and 10.0 g of butyl cellosolve as solvents to obtain a coating composition.

### [Formation of film]

A suitable amount of the coating composition prepared was dripped on the surface of an acrylic resin sheet (plate) (produced by Mitsubishi Rayon Co., Ltd., trade name: SHINKOLITE-AEX) having a length of 10 cm, width of 10 cm and thickness of 3 mm, applied uniformly on the surface of the sheet by bar coating method (using a bar coater No. 50), and then subjected to air drying at room temperature for about 30 min to form a film.

### [Curing of film]

Next, the film was irradiated with ultraviolet rays at an irradiation dose of about 3,000 mJ/cm² by using a high pressure mercury lamp (ultraviolet irradiation device produced by ORC MANUFACTURING CO., LTD., trade name: HANDY-UV-1200, QRU-2161 type) to obtain a cured film. In this connection, the irradiation dose of ultraviolet rays was determined by a UV ray actinometer (produced by ORC MANUFACTURING CO., LTD., type UV-351, peak sensitivity wavelength 360 nm).

### [Evaluation of cured film]

The cured film (protective film) obtained was allowed to stand for one day and then its performances were evaluated according to the methods described below.

### 1) Film thickness

Cross section of the acrylic resin sheet having a cured film thereon was observed with a scanning electron microscope and the film thickness was determined.

### 2) Appearance

Transparency of the acrylic resin sheet having a cured film thereon, and presence or absence of cracks and whitening in the cured film were observed by the naked eye, and the appearance was evaluated according the following criteria:
┌O┘: Film was transparent and had no such defects as cracks and whitening (Excellent).
┌X┘: Film had opaque or cloudy portions or had such defects as cracks and whitening (Poor).

### 3) Mar resistance

Surface of the acrylic resin sheet having a cured film thereon was subjected to a reciprocative scrubbing with a #0000 steel wool under a pressure of 9.8 × 10⁴Pa 10 times (10 times of reciprocations), the extent of scratch produced in an area of 1 cm × 1 cm on the surface of the mar resistance of the cured film was observed, and the film was evaluated according to the following criteria:
[A]: Almost no scratches were produced on the surface of the film.
[B]: 1 to 9 line-like scratches were produced on the surface of the film. Glossy portions remained on the surface of the film.
[C]: 10 to 99 line-like scratches were produced on the surface of the film. Glossy portions remained on the surface of the film.
[D]: More than 100 line-like scratches were produced on the surface of the film. Glossy portions still remained on the surface of the film.
[E]: Glossy portions disappeared from the surface of the film.

### 4) Film adhesion properties

According to lattice pattern cutting test, each 11 line-like cuts were made into a cured film formed on the surface of the acrylic resin sheet both lengthwise and crosswise directions at an interval of 1 mm to form 100 checkers with a razor blade, a cellophane tape was well intimately adhered on the surface of the film, then, the cellophane tape was suddenly peeled off toward the side of an operator who is conducting the test at an angle of 45°, the number of the checkers remained stuck on the surface of the acrylic resin sheet was counted, and the adhesion properties of the film was evaluated according to the following criteria:
[○]: No checkers were peeled off (excellent adhesion properties).
[△]: 1 to 5 checkers were peeled off (intermediate adhesion properties).
[×]: 6 or more checkers were peeled off (poor adhesion properties).

As the result of the evaluations, it was found that the cured film obtained by this Example had an excellent appearance, mar resistance, and film adhesion properties. Results are specifically shown in Table 1.

### <Examples 2 and 3>

Preparation of coating compositions, formation and curing of films, and evaluation of cured films were performed by the same manner as in Example 1 with the exception that the siloxane compounds shown in the columns for Examples 2 and 3, respectively, in Table 1 were used as component (A). Results are shown in Table 1.

### <Example 4>

Preparation of a coating composition, formation and curing of a film, and evaluation of a cured film were performed by the same manner as in Example 1 with the exception that 5.0g of pentaerythritol polyglycidyl ether (produced by Nagase Chemtex Co., Ltd., trade name: DENACOL EX-411) was used as component (C) in addition to the components (A) and (B). Results are shown in Table 1.

### <Example 5>

Preparation of a coating composition, formation and curing of a film, and evaluation of a cured film were performed by the same manner as in Example 1 with the exception that 5.0 g of dipentaerythritol hexaacrylate (produced by NIPPON KAYAKU CO., LTD., trade name: KAYARADO DPHA) as component (D) and 0.2 g of 1-hydroxy-cyclohexyl-phenyl-ketone (produced by Ciba Specialty Chemicals K. K., trade name: IRGACURE 184) as component (E) were blended in addition to the components (A) and (B). Results are shown in Table 1.

### <Example 6>

Preparation of a coating composition, formation and curing of a film, and evaluation of a cured film were performed by the same manner as in Example 4 with the exception that 5.0 g of dipentaerythritol hexaacrylate as component (D) and 0.2 g of 1-hydroxycyclohexylphenyl ketone as component (E) were blended in addition to the components (A), (B), and (C). Results are shown in Table 1.

### <Example 7>

Preparation of a coating composition, formation and curing of a film, and evaluation of a cured film were performed by the same manner as in Example 1 with the exception that the siloxane compound shown in the column for Example 7 in Table 1 was used as component (A). Results are shown in Table 1.

### <Example 8>

Preparation of a coating composition, formation and curing of a film, and evaluation of a cured film were performed by the same manner as in Example 7 with the exception that 10.0 g of 3-glycidoxypropyltrimethoxysilane (produced by Shin-Etsu Chemical Co., Ltd., molecular weight 236.3, product name: KBM-403) was used as component (C) in addition to the components (A) and (B), and a PC sheet having a primer layer described below was employed as a substrate. Results are shown in Table 1.

### Method for preparing PC sheet with primer layer

Dipentaerythritol hexaacrylate (produced by NIPPON KAYAKU CO., LTD.) in an amount of 30 g, 30 g of dipentaerythritol pentaacrylate (produced by NIPPON KAYAKU CO., LTD.), 40 g of tetrahydrofulfuryl acrylate (produced by OSAKA ORGANIC CHEMICAL INDUSTRY LTD.), 1.0 g of benzoin ethyl ether, 1.5 g of benzophenone, 0.2 g of a silicone type surfacve active agent (produced by NIPPON UNICAR COMPANY LIMITED, trade name: L-7001), 10 g of 2-(2-hydroxy-5-tert-butylphenyl)benzotriazole (produced by Ciba Specialty Chemicals K. K., trade name: Tinuvin PS), 120 g of isopropyl alcohol, and 30 g of toluene were mixed and stirred to form a homogeneous primer solution.

A suitable amount of the primer solution was dripped on the surface of a polycarbonate (PC) sheet (produced by Tsutsunaka Plastic Industry Co., Ltd., trade name: Polyca Ace ECK 100) having a thickness of 3 mm, applied by bar coating method (using a bar coater No. 28), air dried at room temperature for 30 min, and then further dried at 60°C for 20 min by using a drier. Subsequently, ultraviolet rays were irradiated to the primer by using a high pressure mercury lamp (ultraviolet ray irradiation device produced by ORC MANUFACTURING CO., LTD., trade name: HANDY-UV-1200, QRU-2161 type) at an irradiation dose of about 2,000 mJ/cm² for about 30 sec to obtain a PC sheet having a primer layer of 10.3 µm thickness thereon.

### <Example 9>

Preparation of a coating composition, formation and curing of a film, and evaluation of a cured film were performed by the same manner as in Example 8 with the exception that 20 g of a solution of an acrylic polymer (polymethyl mathacrylate (PMMA) produced by Mitsubishi Rayon Co., Ltd., trade name DIANAL BR-85) in γ-butyrolactone (solid content: 10% by mass) was blended in addition to the components (A), (B), and (C), and the acrylic resin sheet described above was used as substrate. Results are shown in Table 1.

### <Comparative Example 1 >

Preparation of a coating composition, formation and curing of a film, and evaluation of a cured film were performed by the same manner as in Example 1 with the exception that 18.9 g (10.0 g as solid content) of methyl silicate having a silica conversion concentration of 53% by mass (produced by COLCOAT Co., Ltd., about heptamer in average, average molecular weight about 789, trade name: Methyl Silicate 53A) was used as it was without being hydrolysed and condensed. Results are shown in Table 2.

### <Comparative Example 2>

Preparation of a coating composition, formation and curing of a film, and evaluation of a cured film were performed by the same manner as in Example 1 with the exception that the siloxane compound (A' 4) obtained in Synthesis Example 4 was used instead of the Component (A). Results are shown in Table 2.

### <Comparative Examples 3 to 5>

Preparation of coating compositions, formation and curing of films, and evaluation of cured films were performed by the same manner as in Examples 4, 5, and 6, respectively, with the exception that 18.9 g (10.0 g as solid content) of methyl silicate having a silica conversion concentration of 53% by mass (produced by COLCOAT Co., Ltd., about heptamer in average, average molecular weight about 789, trade name: Methyl Silicate 53A) was used as it was without being hydrolysed and condensed. Results are shown in Table 2.

As will be clear from the Tables 1 and 2 shown below, the coating compositions obtained by the Examples were excellent in the appearance, mar resistance, and film adhesion properties compared with those obtained by the Comparative Examples.

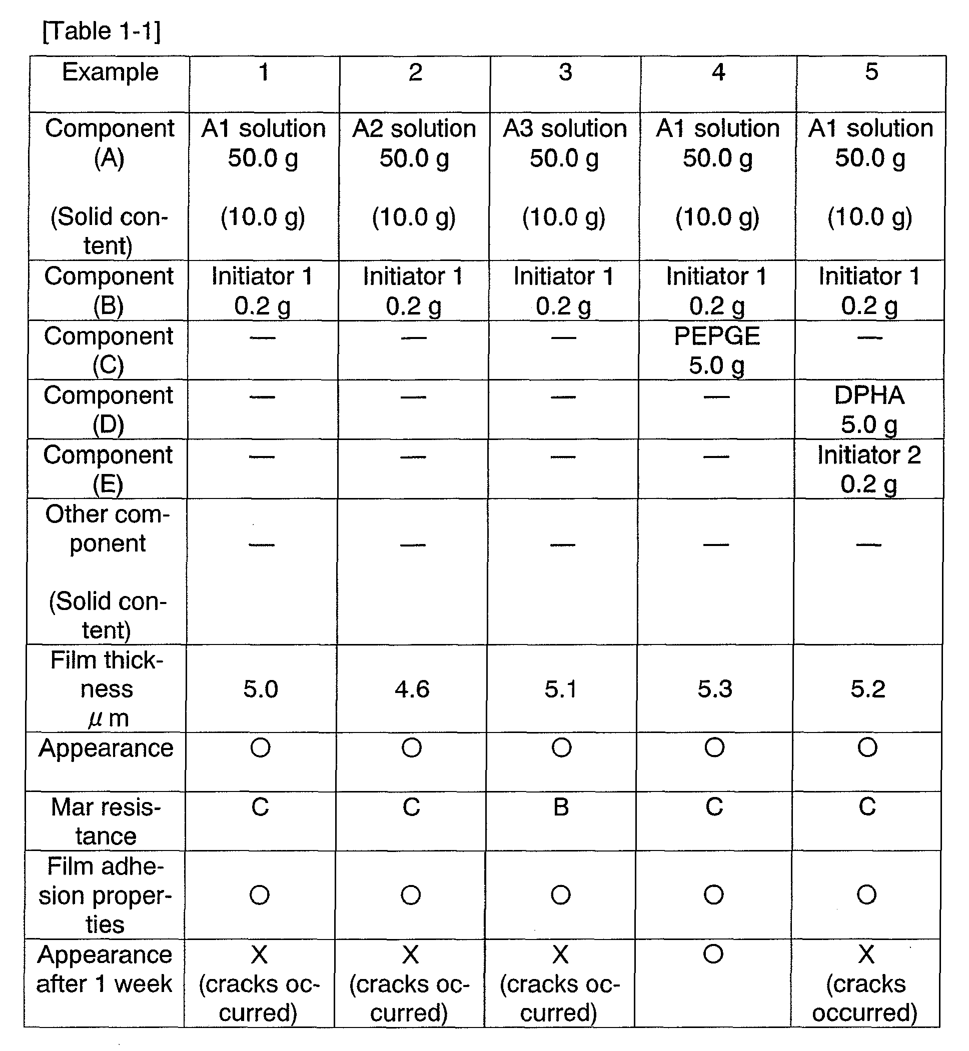

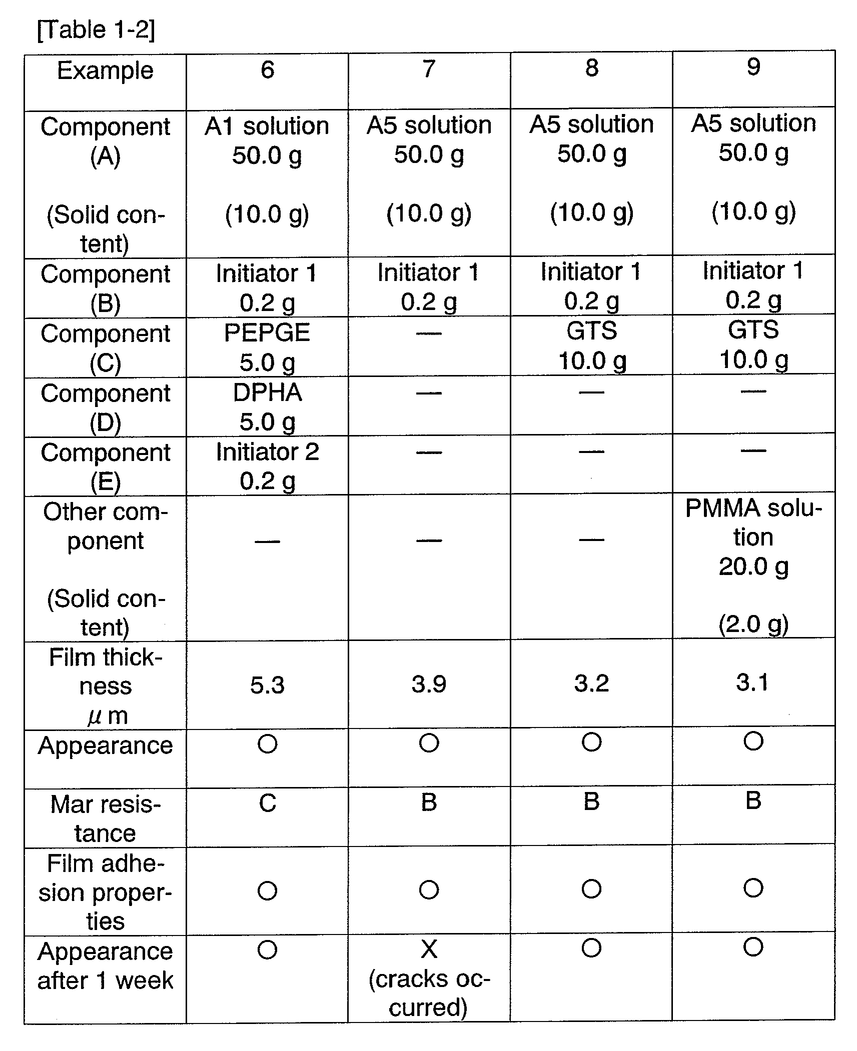

**[Table 2]**

| Comparative Example | 1 | 2 | 3 | 4 | 5 |
|---|---|---|---|---|---|
| Alternative to component (A) | Methyl Silicate A 18.9 g | A'4 solution 50.0 g | Methyl Silicate A 18.9 g | Methyl Silicate A 18.9 g | Methyl Silicate A 18.9 g |
| (Solid content) | (10.0 g) | (10.0 g) | (10.0 g) | (10.0 g) | (10.0 g) |
| Component (B) | Initiator 1 0.2 g | Initiator 1 0.2 g | Initiator 1 0.2 g | Initiator 1 0.2 g | Initiator 1 0.2 g |
| Component (C) | - | - | PEPGE 5.0 g | - | PEPGE 5.0 g |
| Component (D) | - | - | - | DPHA 5.0 g | DPHA 5.0 g |
| Component (E) | - | - | - | Initiator 2 0.2 g | Initiator 2 0.2 g |
| Film thickness µm | 5.1 | 3.5 | 6.0 | 4.5 | 4.6 |
| Appearance | X (cracks occurred) | ○ | ○ | ○ | ○ |
| Mar resistance | X | D | D | D | C |
| Film adhesion properties | X | X | X | X | X |
| Appearance after 1 week | X (cracks occurred) | X (cracks occurred) | X (cracks occurred) | X (cracks occurred) | X (cracks occurred) |

### Abbreviations in Tables 1 and 2:

[A1 solution] : Solution of siloxane compound (A1) prepared in Synthesis Example 1 and having a concentration of 20% by mass.
[A2 solution] : Solution of siloxane compound (A2) prepared in Synthesis Example 2 and having a concentration of 20% by mass.
[A3 solution] : Solution of siloxane compound (A3) prepared in Synthesis Example 3 and having a concentration of 20% by mass.
[A'4 solution]: Solution of siloxane compound (A'4) prepared in Synthesis Example 4 and having a concentration of 20% by mass.
[A5 solution] : Solution of siloxane compound (A5) prepared in Synthesis Example 5 and having a concentration of 20% by mass.
[GTS]: 3-Glycidoxypropyltrimethoxysilane (produced by Shin-Etsu Chemical Co., Ltd., molecular weight 236.3, product name: KBM-403).
[PMMA solution]: Solution of an acrylic polymer (polymethyl methacrylate (PMMA) produced by Mitsubishi Rayon Co., Ltd., trade name: DYANAL BR-85) having a concentration of 10% by mass.
[Methyl Silicate A]: Methyl silicate having a silica conversion concentration of 53% by mass (produced by COLCOAT Co., Ltd., about heptamer in average, average molecular weight about 789, trade name: Methyl Silicate 53A). [Initiator 1]: Propylene carbonate solution of iodonium, (4-methylphenyl)[4-(2-methylpropyl)phenyl]-,hexafluorophosphate (1-) (produced by Ciba Specialty Chemicals K. K., trade name: IRGACURE 250).
[Initiator 2]: 1-Hdroxycyclohexylphenyl ketone (produced by Ciba Specialty Chemicals K. K., trade name: IRGACURE 184).
[PEPGE]: Pentaerythritol polyglycidyl ether (produced by Nagase Chemtex Co., Ltd., trade name: DENACOL EX-411).
[DPHA]: Dipentaerythritol hexaacrylate (produced by NIPPON KAYAKU CO., LTD., trade name: KAYARADO DPHA).

## Claims

1. A coating composition curable by active energy rays which composition contains a siloxane compound (A) obtainable by the hydrolysis and condensation of an alkyl silicate expressed by the following general formula (1) 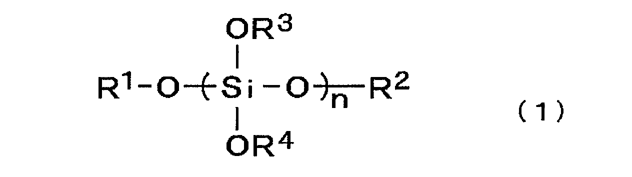 wherein R¹, R², R³, and R⁴ represent an alkyl group having 1 to 5 carbon atoms or an acyl group having 2 to 4 carbon atoms, respectively, and n indicates an integer from 3 to 20,
and a cation polymerization initiator (B) having a sensitivity to the active energy rays.

2. The coating composition curable by active energy rays according to claim 1 wherein the composition further contains an epoxy compound (C).

3. The coating composition curable by active energy rays according to claim 1 wherein the composition further contains a vinyl compound (D) having, in the molecule, a group having polymerizable double bond, and a radical polymerization initiator (E) having a sensitivity to the active energy rays.

4. The coating composition curable by active energy rays according to claim 1 wherein the composition further contains an epoxy compound (C), a vinyl compound (D) having, in the molecule, a group having polymerizable double bond, and a radical polymerization initiator (E) having a sensitivity to the active energy rays.

5. A method for forming a protective film by applying a coating composition defined in any one of claims 1 to 4 on the surface of a substrate and then irradiating active energy rays to the composition to form the protective film.
